# EUROPÄISCHE PATENTSCHRIFT

(11) **EP 3 381 255 B1**
(45) Veröffentlichungstag und Bekanntmachung des Hinweises auf die Patenterteilung: **24.07.2019**
(21) Anmeldenummer: 18172696.9
(22) Anmeldetag: 23.08.2017
(51) Int. Cl.: A01C 7/08

(54) **VERFAHREN ZUR VERTEILUNG KÖRNIGEN GUTS AUF MEHRERE LEITUNGEN**
METHOD FOR DISTRIBUTING GRANULAR MATERIAL ON A PLURALITY OF LINES
PROCÉDÉ DE DISTRIBUTION DES PRODUITS GRANULEUX À UNE PLURALITÉ DE CONDUITES

(30) Priorität: 24.08.2016 DE 102016010270
(43) Veröffentlichungstag der Anmeldung: 03.10.2018
(62) Teilanmeldung aus: 17783393.6
(73) Patentinhaber: Funck, Gerald, 74193 Schwaigern-Stetten (DE)
(72) Erfinder: Funck, Gerald, 74193 Schwaigern-Stetten (DE)
(74) Vertreter: Dennemeyer & Associates S.A.

(56) Entgegenhaltungen:
- WO-A1-2013/063682
- DE-A1- 10 210 010
- DE-A1-102009 031 066

## Beschreibung

### Gebiet der Erfindung

Die vorliegende Erfindung betrifft ein Verfahren zur Verteilung körnigen Guts auf mehrere Leitungen, insbesondere Saatleitungen, gemäß dem Oberbegriff des Anspruchs 1.

### Stand der Technik

Eine effektive Ressourcenschonung wird in der Landwirtschaft durch eine möglichst exakte Dosierung und ortsgenaue Zuordnung auf oder in den Boden während der Ausbringung erhalten. Dies trifft sowohl für flüssig, als auch für fest ausgebrachte Stoffe zu. Beispielsweise kann hierdurch bei der Ausbringung von Saatgut eine optimale Standraumzuteilung der einzelnen Pflanzen, einhergehend mit einem geringen Saatgutverbrauch erzielt werden.

Beispielsweise bei der auch als Drillsaat bezeichneten Reihensaat, ebenso wie bei der Mulch- und der Direktsaat ist es hierzu erforderlich, Samenkörner zu gleichen Anteilen und in gleichbleibender Menge mehreren parallel verlaufenden Särinnen oder -streifen zuzuführen. Die gleichbleibende Menge bezieht sich hierbei auf einen im Wesentlichen gleichbleibenden Quotienten von den einzelnen Särinnen zugeführten und darin abgelegten Samenkörnern über der Zeit.

Von Feldspritzen mit einer Vielzahl an quer zur Fahrtrichtung einer landwirtschaftlichen Maschine auskragenden Auslegern angeordneten Einzeldüsen ist bekannt, einzelne oder Gruppen von Düsen individuell bedarfsweise zu- und abzuschalten, beispielsweise wenn diese über einen bereits behandelten Bodenabschnitt ragen, oder der unter diesen befindliche Bodenabschnitt keine Behandlung erfahren soll.

Für die Verteilung von im Wesentlichen Körner umfassenden körnigen Guts, beispielsweise Saatgut, auf mehrere Ausbringungsorgane oder -einrichtungen, wie etwa Säscharen, ist ebenso eine bedarfsweise Zu- und Abschaltung einzelner Ausbringungsorgane erwünscht, beispielsweise um Fahrgassen freizuhalten oder um bei Überschneidungen mit Bodenabschnitten, in denen bereits beispielsweise eine Saatgutablage erfolgt ist, eine unwirtschaftliche doppelte Kornablage zu vermeiden.

Zur Verteilung körnigen Guts auf mehrere Ausbringungsorgane oder - einrichtungen, wie beispielsweise Säscharen ist bekannt, aus einem einen Vorrat beherbergenden Reservoir Körner umfassendes körniges Gut beispielsweise mittels eines Zellenrads und/oder einer Venturi-Düse einem Luftstrom zuzudosieren. Der so erhaltene Mischstrom aus dem als Trägermedium dienenden Luftstrom und dem zudosierten körnigen Gut wird anschließend einem Verteiler zugeführt. Von dem Verteiler gehen mehrere Verteilerleitungen ab. Jede dieser Verteilerleitungen mündet an einem von mehreren beispielsweise an quer zur Fahrtrichtung einer landwirtschaftlichen Maschine auskragenden Auslegern angeordneten Ausbringungsorganen, beispielsweise Säscharen.

Durch DE 198 14 030 C1 ist von nach dem zuvor beschriebenen Prinzip arbeitenden Verteilmaschinen für körniges Gut bekannt, dass eine Umlenkung des Mischstroms zu einer ungleichmäßigen Konzentration des körnigen Guts an der Außenwandung des Umlenkbogens führt. Als Folge hiervon ist die gleichmäßige Verteilung des körnigen Guts auf die vom Verteiler abgehenden Verteilerleitungen ohne weitere Maßnahmen gestört, da im Bereich der hohen Konzentration liegenden Verteilerleitungen mehr körniges Gut zugeführt wird im Vergleich zu in gegenüberliegenden Bereichen niedriger Konzentration liegenden Verteilerleitungen. Dies schränkt die Konstruktionsmöglichkeiten erheblich ein und führt zu einem hohen Bauraumbedarf, um eine solch ungleichmäßige Konzentration wieder zu neutralisieren.

Durch DE 4411 240 C2 ist bekannt, schwenkbare Klappen oder vertikal bewegliche Schieber in einem Verteiler vorzusehen, um einzelne, vom Verteiler abgehende Verteilerleitungen abzusperren. Die Klappen oder Schieber schließen dabei in Offenstellung bündig mit einer zu einer Verteilerleitung führenden Kanal bildenden Wandung ab, ohne in den Verteilerraum zu ragen. Auch hier verändert sich die Konzentration des in die offen verbleibenden Verteilerleitungen abgegebenen körnigen Guts durch die Absperrung im Verteiler. Mit der Abschaltung kann somit weder eine gleichbleibende Mengenabgabe, noch eine gleichmäßige Verteilung auf die offen verbleibenden Leitungen sichergestellt werden.

Durch DE 102 10 010 A1 ist bekannt, eine Absperrung in oder am Ende oder am Anfang der von einem Verteiler abgehenden Verteilerleitungen, oder im Verteiler vorzusehen. Eine Absperrung im Verteiler sieht vor, gleichzeitig mehrere von einem Verteiler abgehende Verteilerleitungen abzusperren, indem ein Schieber in Richtung parallel zur Einströmrichtung des Mischstroms aus dem als Trägermedium dienenden Luftstrom und dem zudosierten körnigen Gut in einen vom Verteiler beherbergten Verteilerraum eingeschoben wird. Dieser Schieber ist mit radialem Abstand zu den vom Verteilerraum abgehenden Anschlüssen der Verteilerleitungen angeordnet. Der Verteiler weist hierzu an den Anschlüssen der Verteilerleitungen zum Verteilerraum einen größeren Innendurchmesser auf, als an in einem Eintrittsquerschnitt des Mischstroms in den Verteilerraum, wobei um den Schieber herum ein Ringraum verbleibt, von dem aus die Anschlüsse der Verteilerleitungen radial zur Einströmrichtung des Mischstroms gesehen nach außen abgehen. Der Schieber weist die Form eines zum Ringraum konzentrischen Zylinders auf. Durch die Absperrung im Verteiler verändert sich die Konzentration des in die offen verbleibenden Verteilerleitungen abgegebenen körnigen Guts. Mit der Abschaltung kann eine gleichbleibende Mengenabgabe durch die offen verbleibenden Leitungen nicht sichergestellt werden.

Durch DE 196 13 785 C2 ist eine Verteilmaschine bekannt, bei der Sperrmittel vorgesehen sind, um die Abgabe körnigen Guts an einzelne oder Gruppen von an vom Verteiler abgehende Verteilerleitungen angeschlossene Ausbringungsorgane bedarfsweise zu unterbinden. Körniges Gut, das einer abgesperrten Verteilerleitung zugeführt wird, wird über einen Ableitstutzen abgeführt. Der Ableitstutzen ist mit einer Rückführungsleitung verbunden, die das körnige Gut wieder dem Reservoir zuführt oder dem Mischstrom wieder beimengt.

Durch DE 10 2009 031 066 A1 ist ein Verteiler mit mehreren von diesem abgehenden Verteilerleitungen bekannt. Die Verteilerleitungen sind auf halber Höhe gleichmäßig über den Umfang verteilt an einen an seinen gegenüberliegenden Stirnseiten offenen, hohlzylinderförmigen Außenring angeschlossen. Der Außenring ist konzentrisch zu einem hohlzylinderförmigen Verteilergehäuse mit einer Eintrittsöffnung entlang dessen Hohlzylinderachse verschiebbar angeordnet. In einer die gegenüberliegenden Stirnseiten des Verteilergehäuses miteinander verbindenden Gehäusewandung sind in zwei entlang der Hohlzylinderachse versetzten, normal zur Hohlzylinderachse und parallel zueinander liegenden Abgabequerschnitten über den Umfang verteilt Abgabefenster in Übereinstimmung mit den Umfangspositionen der Verteilerleitungen am Außenring angeordnet. In einem ersten Abgabequerschnitt sind dabei eine der Anzahl der Verteilerleitungen entsprechende Zahl von Abgabefenstern angeordnet. In einem zweiten Abgabequerschnitt ist eine geringere Zahl von Abgabefenstern angeordnet. Durch eine Verschiebung des Außenrings entlang der Hohlzylinderachse werden entweder die Abgabefenster des ersten Abgabequerschnitts in Übereinstimmung mit den an den Außenring angeschlossenen Verteilerleitungen gebracht, wobei jeder Verteilerleitung ein Abgabefenster zugeordnet ist und damit eine Abgabe an alle Verteilerleitungen stattfindet, oder die Abgabefenster des zweiten Abgabequerschnitts in Übereinstimmung mit nur einem Teil den an den Außenring angeschlossenen Verteilerleitungen gebracht, wobei nicht jeder Verteilerleitung ein Abgabefenster zugeordnet wird und somit eine Abgabe nur an diejenigen Verteilerleitungen erfolgt, welchen im zweiten Abgabequerschnitt ein Abgabefenster zugeordnet ist.

Dem Stand der Technik gemein ist das ungelöste Problem einer Verblockung der Abgänge der Verteilerleitungen vom Verteiler und/oder des gesamten Verteilers, wenn einzelne oder Gruppen von Verteilerleitungen abgesperrt werden, einhergehend mit einer mangelhaften Erfassung einer solchen Verblockung, eine nicht zufrieden stellende Einbausituation sowohl hinsichtlich des Bauraumbedarfs als auch hinsichtlich einer notwendigen, einzuhaltenden Ausrichtung des Verteilers in Bezug auf die abgehenden Verteilerleitungen, einer erheblichen Empfindlichkeit gegenüber Gravitationseinflüssen, eine unzulängliche Konstanthaltung der Konzentration des abgegebenen körnigen Guts auf die aktiven Verteilerleitungen bei veränderlicher Anzahl offener oder offen verbleibender Verteilerleitungen, sowie einer mangelhaften Gleichverteilung körnigen Guts auf die aktiven Verteilerleitungen.

### Aufgabe

Eine Aufgabe der Erfindung ist die Angabe eines die Nachteile des Standes der Technik ausräumenden Verfahrens zur Verteilung körnigen Guts auf mehrere Leitungen, insbesondere Saatleitungen. Insbesondere ist es eine Aufgabe der Erfindung, ein Verfahren zur Verteilung körnigen Guts auf mehrere Leitungen zu schaffen, welches in Verbindung mit einer bedarfsweisen, individuellen oder gruppenweisen Ab- und Wiederzuschaltung eine gleichmäßige Verteilung auf sowie eine gleichbleibende Mengenabgabe an die einzelnen, beispielsweise zu Ausbringungsorganen führenden Leitungen ermöglicht.

### Lösung

Die obige Aufgabe wird gelöst durch die Merkmale des unabhängigen Anspruchs. Weitere vorteilhafte Ausgestaltungen werden durch die Unteransprüche beschrieben.

Vorteile gegenüber dem Stand der Technik ergeben sich neben einer vollständigen Lösung der gestellten Aufgabe durch eine Einhaltung einer gleichbleibenden Konzentration körnigen Guts je aktiver Verteilerleitung bei veränderlichem Anteil abgesperrter zu offener Verteilerleitungen und eine besonders hohe Güte der Gleichverteilung des körnigen Guts auf die aktiven Verteilerleitungen, einhergehend mit einer verbesserten Kornablage und Standraumzuteilung sowie einem geringeren Verbrauch körnigen Guts.

Die Erfindung kann einzelne oder mehrere einleitend in Verbindung mit dem Stand der Technik oder den hierzu zitierten Dokumenten erwähnte Merkmale aufweisen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Vereinzelungsaggregat ausgestaltet sein kann und stellen keine abschließende Begrenzung dar. Es zeigen in schematischer Darstellung:

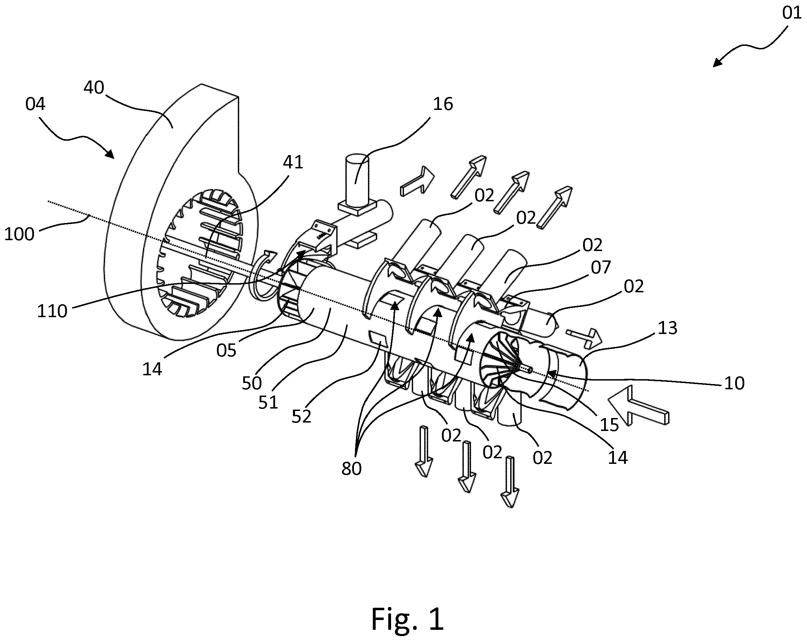

- Fig. 1: ein erstes Beispiel einer Vorrichtung zur Verteilung körnigen Guts auf mehrere Leitungen in perspektivischer Ansicht (nicht Teil der beanspruchten Erfindung);

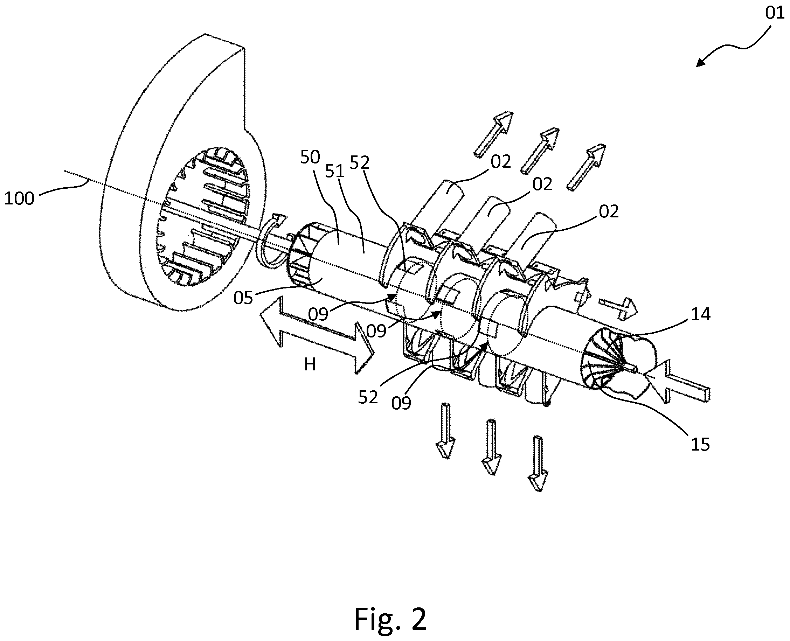

- Fig. 2: ein zweites Beispiel einer Vorrichtung zur Verteilung körnigen Guts auf mehrere Leitungen mit absperrbaren Leitungen und einem hierzu entlang seiner Rotationsachse längsverschiebbaren Rotor in einer ersten Betriebsstellung des Rotors längs der Rotationsachse, bei der alle Abgabeöffnungen offen sind, in perspektivischer Ansicht (nicht Teil der beanspruchten Erfindung);

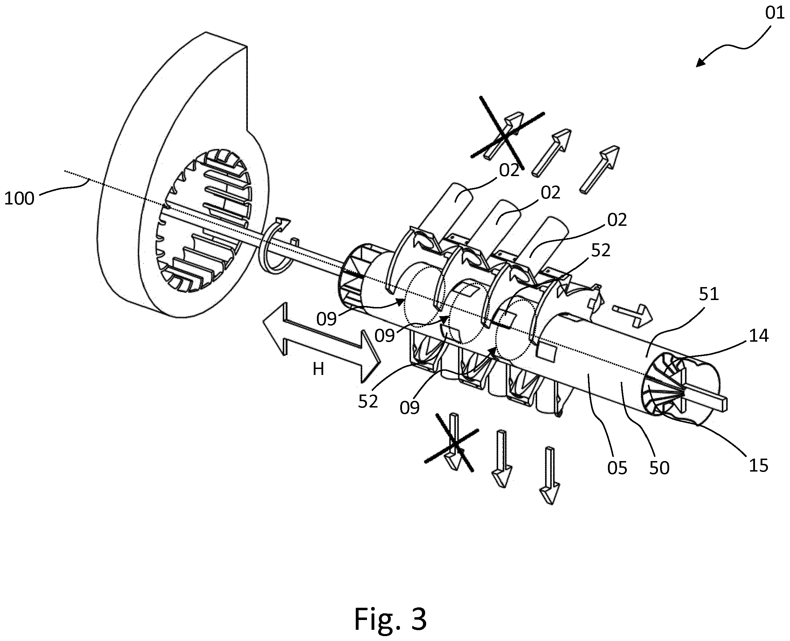

- Fig. 3: die Vorrichtung aus Fig. 2 (nicht Teil der beanspruchten Erfindung) in einer zweiten Betriebsstellung des Rotors längs der Rotationsachse, bei der die einem von insgesamt drei Abgabequerschnitten zugeordneten Abgabeöffnungen abgesperrt und die Abgabeöffnungen der verbleibenden zwei Abgabequerschnitte offen sind, in perspektivischer Ansicht;

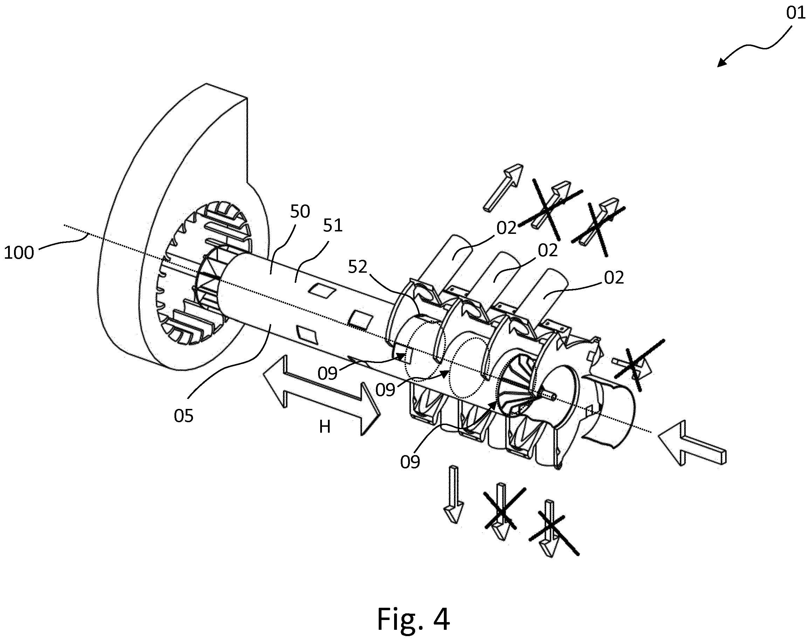

- Fig. 4: die Vorrichtung aus Fig. 2 (nicht Teil der beanspruchten Erfindung) in einer dritten Betriebsstellung des Rotors längs der Rotationsachse, bei der die zweien von insgesamt drei Abgabequerschnitten zugeordneten Abgabeöffnungen abgesperrt und die Abgabeöffnungen des verbleibenden einen Abgabequerschnitts offen sind, in perspektivischer Ansicht;

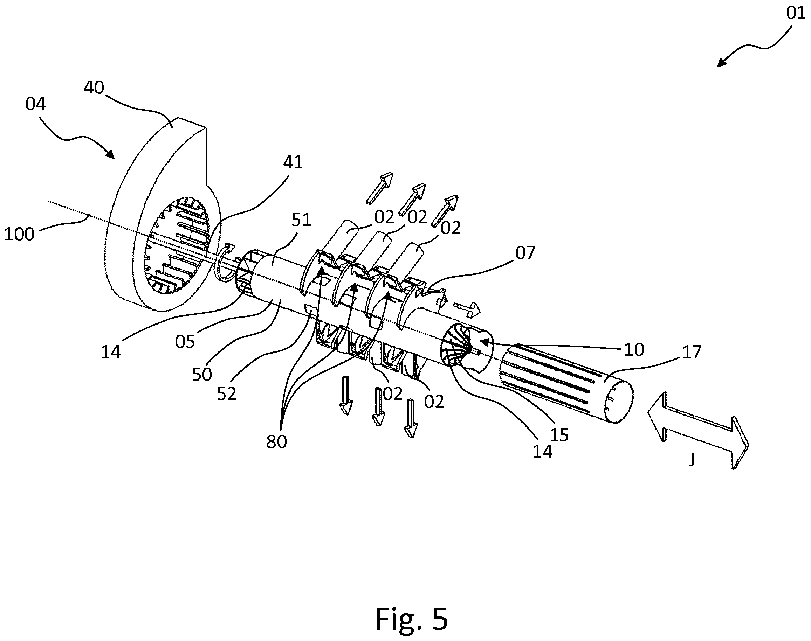

- Fig. 5: ein drittes Beispiel einer Vorrichtung zur Verteilung körnigen Guts auf mehrere Leitungen mit absperrbaren Leitungen und einem hierzu konzentrisch zum Rotor und parallel zur Rotationsachse beweglich angeordneten Schieber in einer ersten Betriebsstellung des Schiebers längs der Rotationsachse, bei der alle Abgabeöffnungen offen sind, in perspektivischer Ansicht (nicht Teil der beanspruchten Erfindung);

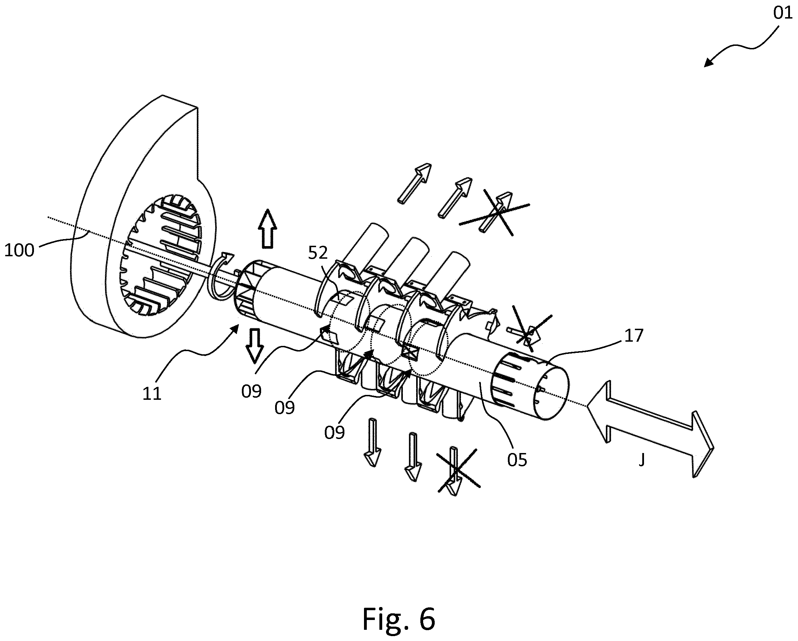

- Fig. 6: die Vorrichtung aus Fig. 5 (nicht Teil der beanspruchten Erfindung) in einer zweiten Betriebsstellung des Schiebers längs der Rotationsachse, bei der die einer von insgesamt drei Abgabequerschnitten zugeordneten Abgabeöffnungen abgesperrt und die Abgabeöffnungen der verbleibenden zwei Abgabequerschnitte offen sind, in perspektivischer Ansicht;

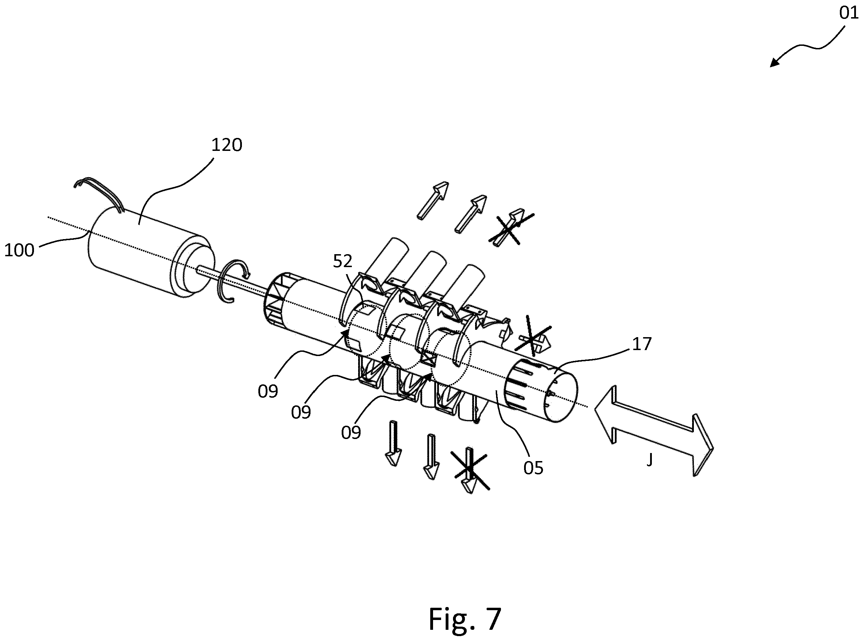

- Fig. 7: ein viertes Beispiel einer Vorrichtung zur Verteilung körnigen Guts auf mehrere Leitungen mit absperrbaren Leitungen und einem hierzu konzentrisch zum Rotor und parallel zur Rotationsachse beweglich angeordneten Schieber in einer Betriebsstellung des Schiebers längs der Rotationsachse, bei der die einer von insgesamt drei Abgabequerschnitten zugeordneten Abgabeöffnungen abgesperrt und die Abgabeöffnungen der verbleibenden zwei Abgabequerschnitte offen sind, in perspektivischer Ansicht (nicht Teil der beanspruchten Erfindung);

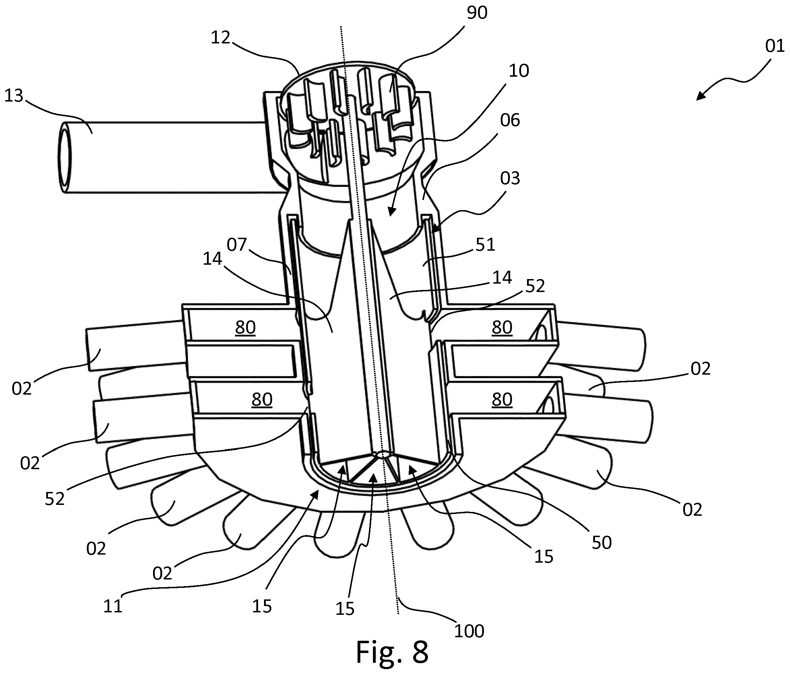

- Fig. 8: ein fünftes Beispiel einer Vorrichtung zur Verteilung körnigen Guts auf mehrere Leitungen in teilweise längs geschnittener, perspektivischer Ansicht (nicht Teil der beanspruchten Erfindung);

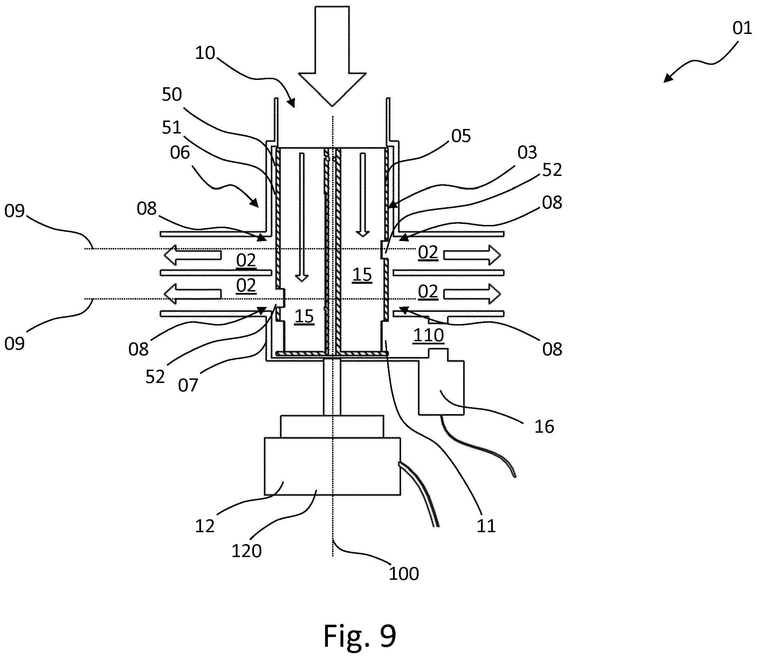

- Fig. 9: eine Prinzipdarstellung einer Vorrichtung zur Verteilung körnigen Guts auf mehrere, an in zwei Abgabequerschnitten angeordnete Abgabeöffnungen angeschlossene Leitungen bei normalem Betrieb in einem entlang der Rotationsachse verlaufenden Längsschnitt (nicht Teil der beanspruchten Erfindung);

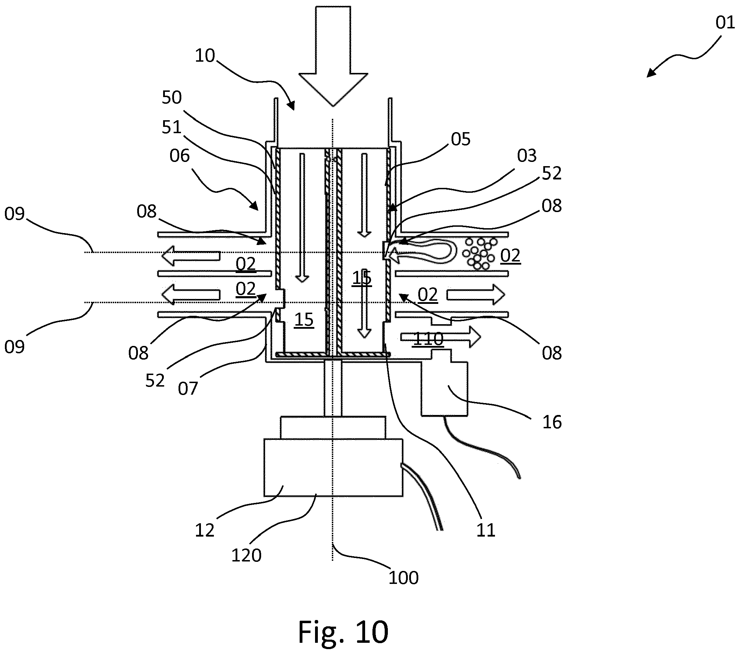

- Fig. 10: eine Prinzipdarstellung einer Vorrichtung zur Verteilung körnigen Guts auf mehrere, an in zwei Abgabequerschnitten angeordnete Abgabeöffnungen angeschlossene Leitungen bei in einer Leitung herrschender Verstopfung in einem entlang der Rotationsachse verlaufenden Längsschnitt (nicht Teil der beanspruchten Erfindung);

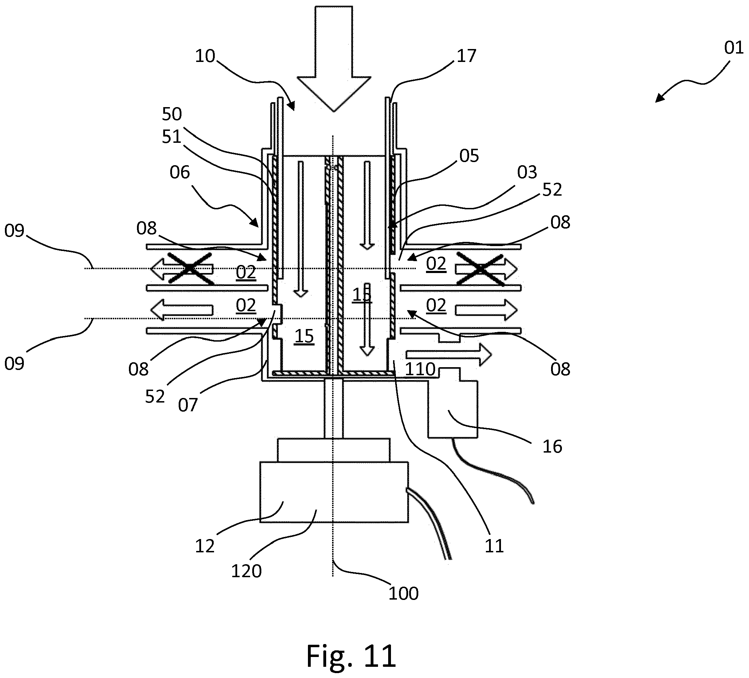

- Fig. 11: eine Prinzipdarstellung einer Vorrichtung zur Verteilung körnigen Guts auf mehrere, an in zwei Abgabequerschnitten angeordnete Abgabeöffnungen angeschlossene Leitungen, mit absperrbaren Leitungen und einem hierzu konzentrisch zum Rotor und parallel zur Rotationsachse beweglich angeordneten Schieber in einer Betriebsstellung des Schiebers längs der Rotationsachse, bei der die einer von zwei Abgabequerschnitten zugeordneten Abgabeöffnungen abgesperrt und die Abgabeöffnungen des verbleibenden Abgabequerschnitts offen sind, in einem entlang der Rotationsachse verlaufenden Längsschnitt (nicht Teil der beanspruchten Erfindung);

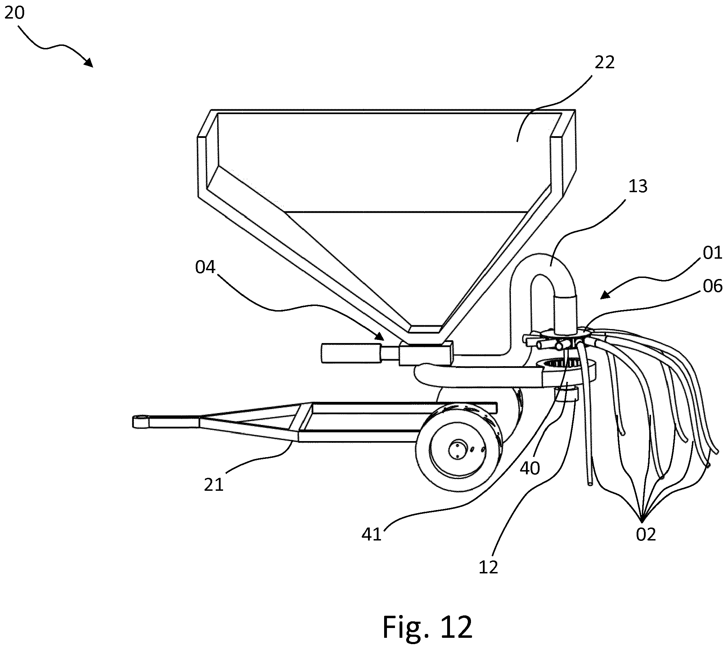

- Fig. 12: eine Vorrichtung zur Verteilung körnigen Guts auf mehrere Leitungen als Teil einer Verteilmaschine (nicht Teil der beanspruchten Erfindung);

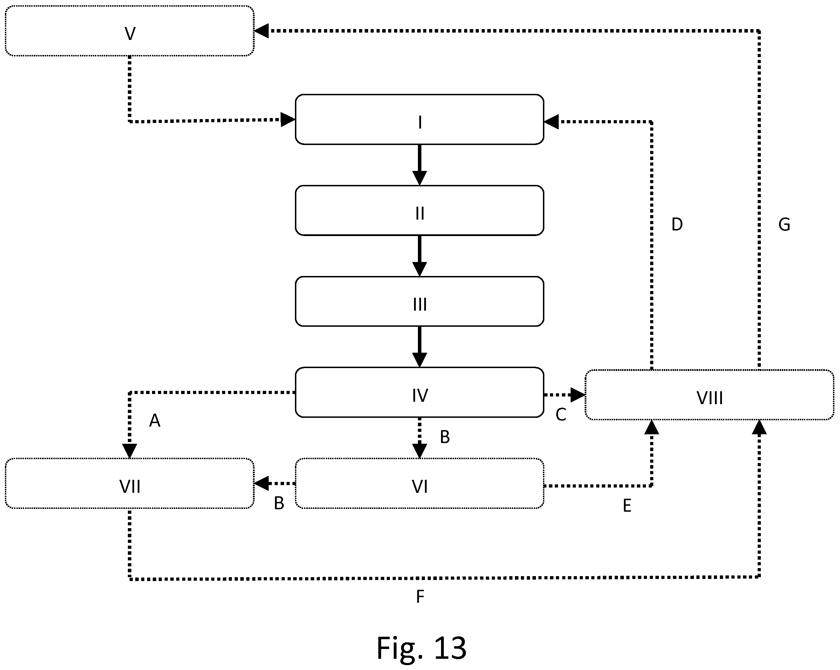

- Fig. 13: ein Ablaufdiagramm eines Verfahrens zur Verteilung körnigen Guts auf mehrere Leitungen.

Ein in Fig. 13 in seinem Ablauf dargestelltes Verfahren zur Verteilung körnigen Guts auf mehrere, dauerhaft oder zeitlich getaktet mit einem Verteilerraum kommunizierende, beispielsweise durch Schläuche gebildete Leitungen 02 sieht in einem ersten Verfahrensschritt I vor, zunächst einen Mischstrom durch Beimengung Körner umfassenden körnigen Guts zu einem als Trägermedium dienenden Luftstrom zu erzeugen.

Anschließend sieht das Verfahren in einem zweiten Verfahrensschritt II vor, dass der zuvor im ersten Verfahrensschritt I erzeugten Mischstrom in einem Übergabequerschnitt in einen hohlzylinderförmigen Verteilerraum mit mindestens einer Mündungsöffnung eintritt.

Der Übergabequerschnitt kann eine beispielsweise normal zu einer Hauptströmungsrichtung des Mischstroms liegende Ebene aufspannen. Grundsätzlich kann der Übergabequerschnitt eine beliebig im Raum verlaufende, beispielsweise einen Teil einer Zylinderwandung nachbildende oder einnehmende Fläche aufspannen.

Der hohlzylinderförmige Verteilerraum weist gegenüberliegende, kreisförmige Stirnflächen auf.

Der hohlzylinderförmige Verteilerraum kann eine die Stirnseiten miteinander verbindende Mantelfläche aufweisen.

Der hohlzylinderförmige Verteilerraum kann konstanten, aber auch veränderlichen Querschnitt parallel zu seinen Stirnseiten aufweisen.

Die mindestens eine Mündungsöffnung befindet sich beispielsweise in wenigstens einer der Stirnflächen und/oder nahe einer solchen, beispielsweise zwischen der Mantelfläche des hohlzylinderförmigen Verteilerraums und wenigstens einer Stirnseite.

Befindet sich die Mündungsöffnung in einer Stirnseite oder nimmt sie eine Stirnseite ein, so kann sie dabei eine normal zur Rotationsachse verlaufende Ebene aufspannen.

Befindet sich die Mündungsöffnung zwischen der Mantelfläche des hohlzylinderförmigen Verteilerraums und wenigstens einer Stirnseite, so nimmt sie einen an eine Stirnseite angrenzenden kreisringförmigen Abschnitt der Mantelfläche des hohlzylinderförmigen Verteilerraums ein.

Die Mündungsöffnung kann eine Stirnseite und/oder einen kreisringförmigen Abschnitt einer an eine Stirnseite angrenzenden Mantelfläche beispielsweise des hohlzylinderförmigen Verteilerraums teilweise oder vollständig einnehmen. Tritt der Mischstrom an oder nahe einer der Stirnseiten des hohlzylinderförmigen Verteilerraums ein, so befindet sich die mindestens eine Mündungsöffnung möglichst weit vom Übergabequerschnitt entfernt, beispielsweise an oder nahe der vom Übergabequerschnitt entfernten, beispielsweise dem Übergabequerschnitt gegenüberliegenden Stirnseite.

In dem zweiten Verfahrensschritt II wird der Mischstrom mit dem Eintritt in den Verteilerraum in ein um eine mit der Hohlzylinderachse des Verteilerraums übereinstimmende Rotationsachse rotierendes Bündel von einer der Anzahl der einzelnen Leitungen und/oder der Anzahl von Gruppen aus mehreren Leitungen entsprechende Zahl oder einem ganzzahligen Vielfachen dieser Zahl von jeweils der oder mindestens einer Mündungsöffnung des hohlzylinderförmigen Verteilerraums zustrebenden, beispielsweise parallelen Teilströmen überführt. Jeder Teilstrom verläuft dabei innerhalb eines eigenen, sich einseitig entlang der Rotationsachse erstreckenden Sektorkanals. Zusammen umgeben alle Sektorkanäle sowie diese trennende Sektortrennwände gemeinsam die Rotationsachse, wobei jeder Sektorkanal die Rotationsachse nur zum Teil umgibt. Beispielsweise können die Sektorkanäle und die durch sie hindurchströmenden Teilströme parallel zueinander sowie zur Rotationsachse verlaufen. Jeder Teilstrom weist dabei im Übergabequerschnitt einen Teilstromeintrittsquerschnitt auf, von denen jeder Teilstromeintrittsquerschnitt jeden Teilstroms während eines durch die Rotation des Bündels um die Rotationsachse stattfindenden Umlaufs der Teilströme um die Rotationsachse beziehungsweise während einer Umdrehung des Bündels den Übergabequerschnitt überstreicht.

Hierdurch besteht keine stationäre örtliche Zuordnung der Teilstromeintrittsquerschnitte im Übergabequerschnitt. Im Gegenteil nimmt vielmehr jeder Teilstromeintrittsquerschnitt während eines Umlaufs um die Rotationsachse jeden Ort des Übergabequerschnitts zumindest einmal ein. Dadurch wird unabhängig von einer inhomogenen Konzentration körnigen Guts im Mischstrom eine gleichmäßige Verteilung des im Mischstrom enthaltenen körnigen Guts auf die einzelnen Teilströme erhalten.

Anschaulich wird durch die Aufteilung des Mischstroms in beispielsweise parallel zueinander sowie parallel zur Rotationsachse verlaufende, vom Übergabequerschnitt der Mündungsöffnung zustrebende und um die Rotationsachse umlaufende Teilströme ein Bündel von Teilströmen erhalten, im Zentrum welchen Bündels die Rotationsachse verläuft, um welche Rotationsachse das Bündel rotiert. Jeder vom Übergabequerschnitt zur Mündungsöffnung strebende Teilstrom führt dabei während einer Rotation des Bündels in jedem zwischen Übergabequerschnitt und Mündungsöffnung liegenden Querschnitt eine Revolution beziehungsweise einen Umlauf um die Rotationsachse aus.

Das Bündel aus Teilströmen kann sich dabei entlang der Rotationsachse vom Übergabequerschnitt zu den Abgabequerschnitten und/oder zur Mündungsöffnung hin kegelförmig weiten. Mit fortschreitendem Abstand zum Übergabequerschnitt entlang der Rotationsachse und zunehmender Annäherung an die Abgabequerschnitte und/oder zur Mündungsöffnung hin kann ebenfalls eine Zunahme des Abstands nach innen, zur Rotationsachse hin einhergehen. In diesem Fall verläuft jeder Teilstrom innerhalb eines Sektors eines Kegelstumpfrings.

Die Teilströme verlaufen damit nicht konzentrisch zueinander, sondern jeder Teilstrom ist in Bezug auf die Rotationsachse exzentrisch versetzt und verläuft beispielsweise parallel zu dieser um diese um.

Die Überführung des Mischstroms in die einzelnen Teilströme des Bündels erfolgt entweder zeitgleich oder in zyklisch wiederkehrender zeitlicher Reihenfolge. Auch eine Kombination ist denkbar. Bei der zeitgleichen Überführung mündet der Mischstrom im Übergabequerschnitt in alle Teilströme des Bündels, beziehungsweise geht der Mischstrom in alle Teilströme des Bündels über. Bei der zyklisch wiederkehrenden zeitlichen Reihenfolge mündet der Mischstrom in einer momentanen Betrachtung nur in einen oder einen Teil aller Teilströme des Bündels, beziehungsweise geht der Mischstrom in nur einen Teilstrom oder einen Teil aller Teilströme des Bündels über, wobei der Mischstrom durch die Rotation des Bündels zeitlich aufeinander folgend in einen Teilstrom nach dem anderen oder in einen Teil aller Teilströme des Bündels nach dem anderen mündet beziehungsweise übergeht.

Die Rotationsachse verläuft zentral durch das Bündel hindurch. Die Rotationsachse kann beispielsweise parallel zu einer bereits erwähnten, im Übergabequerschnitt vorherrschenden Hauptströmungsrichtung des Mischstroms verlaufen. Alternativ oder zusätzlich kann die Rotationsachse normal auf einer vom Übergabequerschnitt aufgespannten Ebene aufstehen.

Der Verteilerraum kann zur Überführung des Mischstroms in das um die Rotationsachse rotierende Bündel von Teilströmen vermittels um die Rotationsachse rotierende Trennwände aufgeteilt sein.

Mit anderen Worten wird der Mischstrom im Übergabequerschnitt mit seinem Eintritt in den hohlzylinderförmigen Verteilerraum zeitgleich und/oder in zyklisch wiederkehrender zeitlicher Reihenfolge in eine der Anzahl der einzelnen Leitungen und/oder der Anzahl von Gruppen aus mehreren Leitungen entsprechende Zahl oder einem ganzzahligen Vielfachen dieser Zahl von der Mündungsöffnung zustrebende und um eine gemeinsame, mit der Hohlzylinderachse des Verteilerraums übereinstimmende, beispielsweise parallel zur Hauptströmungsrichtung verlaufende und/oder beispielsweise normal auf einer vom Übergabequerschnitt aufgespannten Ebene aufstehende Rotationsachse im Kreis umlaufende, beispielsweise parallel zueinander sowie zur Rotationsachse verlaufende Teilströme überführt, beispielsweise durch um die Rotationsachse rotierende Trennwände aufgeteilt, wobei jeder Teilstrom im Übergabequerschnitt einen Teilstromeintrittsquerschnitt aufweist, von denen jeder Teilstromeintrittsquerschnitt jeden Teilstroms während eines Umlaufs der Teilströme um die Rotationsachse den Übergabequerschnitt überstreicht, so dass keine stationäre örtliche Zuordnung der Teilstromeintrittsquerschnitte im Übergabequerschnitt besteht, sondern vielmehr jeder Teilstromeintrittsquerschnitt während eines Umlaufs um die Rotationsachse jeden Ort des Übergabequerschnitts zumindest einmal einnimmt.

Grundsätzlich können auch in, an oder zu beiden gegenüberliegenden Stirnseiten hin Mündungsöffnungen vorgesehen sein. Beispielsweise können beide gegenüberliegende Stirnseiten mit Mündungsöffnungen versehen sein beziehungsweise Mündungsöffnungen aufweisen oder von durch Mündungsöffnungen aufgespannte Flächen umfassen.

Im Fall von an oder zu beiden Stirnseiten des hohlzylinderförmigen Verteilerraums vorgesehenen Mündungsöffnungen kann ein erster Teilstrom der Mündungsöffnung auf der einen Stirnseite und die beiden in Umfangsrichtung beidseitig zu dieser benachbarten Teilströme der Mündungsöffnung auf der gegenüberliegenden Stirnseite zustreben. Vorzugsweise befindet sich der Übergabequerschnitt hierbei in der Mitte des hohlzylinderförmigen Verteilerraums an der diesen umgebenden Innenwandung.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Ebenfalls wichtig ist hervorzuheben, dass die Summe der Flächen der Teilstromeintrittsquerschnitte der Teilströme gemeinsam der Fläche des Übergabequerschnitts entsprechen können, wobei die Teilstromeintrittsquerschnitte im Übergabequerschnitt um die Rotationsachse rotieren. Alternativ kann die Fläche des Übergabequerschnitts kleiner sein, als zumindest die Summe der Flächen der Teilstromeintrittsquerschnitte, wobei während der Rotation um die Rotationsachse die Teilstromeintrittsquerschnitte beispielsweise einer nach dem anderen den Übergabequerschnitt überstreichen.

In einem dritten Verfahrensschritt III sieht das Verfahren die Erzeugung einer Konzentration des körnigen Guts innerhalb jeden Teilstroms radial weg von der Rotationsachse an einer den hohlzylinderförmigen Verteilerraum zumindest abschnittsweise konzentrisch zur Rotationsachse umgebenden Wandung vor. Diese Konzentration wird durch die Rotation des Bündels um die Rotationsachse erhalten.

Bei der Wandung kann es sich beispielsweise um eine Innenwandung eines Außenrings eines zumindest abschnittsweise als ein Trommelrotor ausgeführten, den Verteilerraum einnehmenden oder diesen bildenden Rotors handeln.

Alternativ kann es sich bei der Wandung um eine Gehäusewandung eines einen Verteilergehäuseinnenraum und einen in diesem um eine Rotationsachse drehbar gelagerten, den hohlzylinderförmigen Verteilerraum mit der mit der Rotationsachse übereinstimmenden Hohlzylinderachse einnehmenden Rotor beherbergenden Verteilergehäuses handeln, welche Gehäusewandung den Verteilergehäuseinnenraum radial weg von der Rotationsachse begrenzt und den Rotor zumindest abschnittsweise umgibt.

In einem vierten Verfahrensschritt IV sieht das Verfahren vor, dass schließlich jeder wenigstens einer der mindestens einen Mündungsöffnung zustrebende Teilstrom auf seinem Weg dorthin einen ihm zugeordneten Abgabequerschnitt erreicht. Jedem Abgabequerschnitt ist eine Leitung oder eine Gruppe von mehreren Leitungen zugeordnet. Damit sind eine der Anzahl der einzelnen Leitungen oder der Anzahl von Gruppen aus mehreren Leitungen entsprechende Zahl von parallel liegenden Abgabequerschnitten vorgesehen, von denen jeder eine eigene, normal zur Rotationsachse liegende Ebene aufspannt. In jedem Abgabequerschnitt ist in der zuvor in Verbindung mit dem dritten Verfahrensschritt III erwähnten Wandung mindestens eine in eine Leitung oder in eine Gruppe von mehreren Leitungen mündende Abgabeöffnung angeordnet. Durch die vermittels der Rotation erzeugten Zentrifugalkräfte wird zumindest in den Teilströmen enthaltenes körniges Gut durch die jeweilige Abgabeöffnung in eine Leitung und/oder Gruppe von Leitungen abgegeben.

Sind eine der Anzahl der einzelnen Leitungen und/oder der Anzahl von Gruppen aus mehreren Leitungen entsprechende Zahl von jeweils wenigstens einer der mindestens einen Mündungsöffnung des hohlzylinderförmigen Verteilerraums zustrebenden, beispielsweise parallel zueinander sowie zur Rotationsachse verlaufenden Teilströmen vorgesehen, so ist jedem Teilstrom ein von den den verbleibenden Teilströmen zugeordneten Abgabequerschnitten verschiedener Abgabequerschnitt zugeordnet. Mit anderen Worten ist jedem einer Leitung und/oder einer Gruppe aus mehreren Leitungen zugeordnete Abgabequerschnitt ein Teilstrom zugeordnet.

Sind einem ganzzahligen Vielfachen einer der Anzahl der einzelnen Leitungen und/oder der Anzahl von Gruppen aus mehreren Leitungen entsprechende Zahl von jeweils wenigstens einer der mindestens einen Mündungsöffnung des hohlzylinderförmigen Verteilerraums zustrebenden, beispielsweise parallel zueinander sowie zur Rotationsachse verlaufenden Teilströmen vorgesehen, so ist jeder Gruppe von einer dem ganzzahligen Vielfachen entsprechenden Zahl von Teilströmen ein Abgabequerschnitt zugeordnet. Auch hierbei ist der einer Gruppe von einer dem ganzzahligen Vielfachen entsprechenden Zahl von Teilströmen zugeordnete Abgabequerschnitt verschieden von den den verbleibenden Gruppen von jeweils einer dem ganzzahligen Vielfachen entsprechenden Zahl von Teilströmen zugeordneten Abgabequerschnitten. Mit anderen Worten sind jedem einer Leitung und/oder einer Gruppe aus mehreren Leitungen zugeordneten Abgabequerschnitt eine dem ganzzahligen Vielfachen entsprechende Zahl von Teilströmen zugeordnet.

Wichtig ist hierbei hervorzuheben, dass nur ein einem Abgabequerschnitt zugeordneter Teilstrom das von ihm mittransportierte körnige Gut an die diesem Abgabequerschnitt zugeordnete Leitung oder Gruppe von Leitungen abgeben kann.

Überstreicht ein der oder zumindest einer Mündungsöffnung zustrebender Teilstrom während der Rotation des Bündels von Teilströmen um die Rotationsachse die mindestens eine Abgabeöffnung im ihm zugehörigen, einer Leitung oder einer Gruppe von mehreren Leitungen zugeordneten Abgabequerschnitt, so wird das in dem Teilstrom enthaltene körnige Gut gemeinsam mit oder von dem als Trägermedium dienenden Luftstrom getrennt durch die Abgabeöffnung der an diese angeschlossenen Leitung und/oder Gruppe von Leitungen zugeführt und damit in die dem entsprechenden Abgabequerschnitt zugeordnete Leitung und/oder Gruppe von Leitungen abgegeben.

Zumindest ein Teil zumindest des als Trägermedium dienenden Luftstroms kann hierbei durch die Mündungsöffnung austreten.

Im Fall einer Verstopfung und/oder einer Absperrung einer oder mehrerer Leitungen oder einer oder mehrerer Gruppen von Leitungen kann der betroffene Teilstrom oder können die betroffenen Teilströme mit dem von ihnen transportierten körnigen Gut durch die Mündungsöffnung austreten.

Hierdurch bleibt die Mengenabgabe an die einzelnen Leitungen oder Gruppen von mehreren Leitungen auch bei einer Blockade oder einer Absperrung einer oder mehrerer Leitungen oder einer oder mehrerer Gruppen von Leitungen unbeeinflusst. Damit ist eine gleichbleibende Mengenabgabe an die offen verbleibenden, beispielsweise zu Ausbringungsorganen führenden Leitungen sichergestellt.

Das Verfahren kann in einem beispielsweise vor dem ersten Verfahrensschritt I oder nach dem vierten Verfahrensschritt IV oder an beliebiger Stelle zwischen dem ersten Verfahrensschritt I und dem vierten Verfahrensschritt IV vorzunehmenden, gestrichelt dargestellten ergänzenden Verfahrensschritt V eine bedarfsweise, individuelle oder gruppenweise Ab- und Wiederzuschaltung mindestens einer Leitung und/oder mindestens einer Gruppe von mehreren Leitungen vorsehen. Hierzu sieht das Verfahren vor, dass die beispielsweise zu Ausbringungsorganen führenden Leitungen und/oder die Abgabeöffnungen, an welche jeweils eine oder eine Gruppe von mehreren Leitungen angeschlossen sind, bei Bedarf einzeln oder gruppenweise absperrbar sind. Ein Teilstrom, der einem Abgabequerschnitt zugehört, dem ein Abgabequerschnitt mit einer oder mehreren in eine abgesperrte Leitung und/oder in eine abgesperrte Gruppe von mehreren Leitungen mündenden Abgabeöffnungen zugeordnet ist, tritt mitsamt dem von ihm mittransportierten körnigen Gut durch die Mündungsöffnung aus.

Im ergänzenden Verfahrensschritt V kann dabei so oft, wie dies bis zum Aufbrauch des Vorrats körnigen Guts erforderlich sein sollte, eine oder mehrere Leitungen oder eine oder mehrere Gruppen von mehreren Leitungen bedarfsweise abgesperrt und/oder wiederzugeschaltet werden.

Das Verfahren sieht demnach vor, dass mindestens eine Leitung und/oder mindestens eine Gruppe von mehreren Leitungen und/oder die zumindest eine Abgabeöffnung, welche zu dieser oder zu diesen führt beziehungsweise an welche eine Leitung und/oder mindestens eine Gruppe von mehreren Leitungen angeschlossen ist, bedarfsweise absperrbar, beispielsweise verschließbar ist. Ein einem einer verschlossenen Leitung und/oder Gruppe und/oder dieser zugeordneten Abgabeöffnung zugeordneten Abgabequerschnitt zuführender Teilstrom tritt mitsamt dem von dieser mittransportierten körnigen Gut durch die Mündungsöffnung aus.

Die Absperrung kann hierbei an der mindestens einen Abgabeöffnung des einer verschlossenen Leitung und/oder Gruppe von mehreren Leitungen zugeordneten Abgabequerschnitts oder in der oder den Leitungen vorgesehen sein, ohne dass hierdurch eine Gleichverteilung und eine Konstanthaltung der ausgebrachten Menge körnigen Guts in den offen verbleibenden Leitungen beeinflusst wird, da ein einer von einer Absperrung betroffenen Abgabeöffnung zugeordneter Teilstrom dann mitsamt dem von ihm transportierten körnigen Gut durch die Mündungsöffnung austritt.

Alternativ kann die Absperrung im Teilstromeintrittsquerschnitt vorgesehen sein, wobei hierbei zur Konstanthaltung der ausgebrachten Menge körnigen Guts in den offen verbleibenden Leitungen die Dosierung der Beimengung Körner umfassenden körnigen Guts zu dem als Trägermedium dienenden Luftstrom verändert werden muss.

Besonders bevorzugt erfolgt die Absperrung durch mindestens einen beispielsweise rohr- oder rohrabschnittsförmigen Schieber, der entlang der Rotationsachse über die Abgabeöffnungen eines Abgabequerschnitts nach dem anderen geschoben wird. In Verbindung mit einer Zuordnung der beispielsweise zu an einem Ausleger angeordneten Ausbringungsorganen führenden Leitungen oder Gruppen von Leitungen beispielsweise von außen nach innen und/oder von innen nach außen und/oder von links nach rechts und/oder von rechts nach links an dem Ausleger können so nach Bedarf durch Ein- und Ausfahren des Schiebers zeitweilig einzelne Leitungen oder Gruppen von mehreren Leitungen eine nach der anderen abgesperrt und dadurch stillgelegt, und sobald der Bedarf nach einer Stilllegung nicht mehr vorliegt wieder geöffnet und dadurch erneut zur Ausbringung körnigen Guts in Betrieb genommen werden.

Das Verfahren kann in einem vorzugsweise nach dem vierten Verfahrensschritt IV vorzunehmenden, gestrichelt dargestellten zusätzlichen Verfahrensschritt VI vorsehen, dass aus der Mündungsöffnung austretendes körniges Gut erfasst wird, beispielsweise indem die Körner gezählt werden. Dies kann beispielsweise der Erfassung einer Verstopfung dienen, was beispielsweise in Verbindung mit der Erzeugung, Übermittlung und Ausgabe eines Signals genutzt werden kann, den Bediener einer Verteilermaschine zur Behebung der Verstopfung anzuhalten. Ein sich hierdurch ergebender Vorteil ist eine Vermeidung einer Verschwendung, sowohl von potentiellem Standraum, als auch von körnigem Gut.

Wird hierbei zusätzlich eine Drehwinkelerfassung des Rotors vorgenommen, so ist es möglich, denjenigen Abgabequerschnitt und damit die diesem zugeordnete Leitung oder Gruppe von mehreren Leitungen zu identifizieren. Damit kann eine Verstopfung erfasst und gezielt auf deren Auftreten sowie die damit verbundenen Möglichkeiten zu deren Behebung hingewiesen werden.

Besonders vorteilhaft sieht das Verfahren in einem beispielsweise im Anschluss an den vierten Verfahrensschritt IV stattfindenden optionalen Verfahrensschritt VII vor, dass aus der Mündungsöffnung austretendes körniges Gut gesammelt wird. Hierdurch wird ein besonders ressourcenschonender Umgang mit körnigem Gut erhalten. Dieser optionale Verfahrensschritt VII kann wie durch den Pfeil A angedeutet unmittelbar im Anschluss an den vierten Verfahrensschritt IV stattfindend, oder wie durch Pfeile B angedeutet im Anschluss an eine gegebenenfalls vorgesehene Erfassung aus der Mündungsöffnung austretenden körnigen Guts in einem zusätzlichen Verfahrensschritt VI.

Besonders bevorzugt sieht das Verfahren in einem weiteren Verfahrensschritt VIII vor, dass aus der Mündungsöffnung austretendes körniges Gut erneut dem Luftstrom beigemengt und der Verteilung zugeführt wird.

Hierdurch wird zusätzlich zu einem besonders ressourcenschonenden Umgang mit körnigem Gut die Anzahl von Leerfahrten zur erneuten Befüllung eines von einer Verteilmaschine mitgeführten Reservoirs mit einem Vorrat körnigen Guts verringert, da auch die bei Normalbetrieb zur Zufuhr einer abgesperrten Leitung vorgesehene Menge körnigen Guts dem Vorrat wieder zugeführt und auf die offen verbleibenden Leitungen verteilt wird. Somit hält der Vorrat länger.

Ein solcher gegebenenfalls vorgesehener und daher gestrichelt dargestellter, weiterer Verfahrensschritt VIII kann wie durch gestrichelte Pfeile C und D angedeutet unmittelbar nach dem vierten Verfahrensschritt IV und bis zum Aufbrauch des Vorrats körnigen Guts unmittelbar vor dem ersten Verfahrensschritt I ausgeführt werden.

Sieht das Verfahren vor, dass aus der Mündungsöffnung austretendes körniges Gut in einem weiteren Verfahrensschritt VIII erneut dem Luftstrom beigemengt und der Verteilung zugeführt wird, und dass das aus der Mündungsöffnung austretende körnige Gut in einem zusätzlichen Verfahrensschritt VI erfasst wird, so erfolgt der weitere Verfahrensschritt VIII wie durch Pfeile B und E dargestellt erst im Anschluss an den zusätzlichen Verfahrensschritt VI.

Sieht das Verfahren in einem optionalen Verfahrensschritt VII vor, dass aus der Mündungsöffnung austretendes körniges Gut gesammelt wird, und sieht das Verfahren darüber hinaus vor, dass aus der Mündungsöffnung austretendes körniges Gut in einem weiteren Verfahrensschritt VIII erneut dem Luftstrom beigemengt und der Verteilung zugeführt wird, so erfolgt der weitere Verfahrensschritt VIII wie durch die Pfeile A und F dargestellt im Anschluss an den auf den vierten Verfahrensschritt IV unmittelbar folgenden optionalen Verfahrensschritt VII.

Ein Verfahren, welches vorsieht, aus der Mündungsöffnung austretendes körniges Gut in einem weiteren Verfahrensschritt VIII erneut dem Luftstrom beizumengen, kann dies wie durch einen Pfeil D dargestellt ohne oder wie durch einen Pfeil G dargestellt in Verbindung mit einer bedarfsweisen, individuellen oder gruppenweisen Ab- und Wiederzuschaltung mindestens einer Leitung und/oder mindestens einer Gruppe von mehreren Leitungen in einem ergänzenden Verfahrensschritt V vorsehen. Im ergänzenden Verfahrensschritt V kann dabei wie bereits erwähnt so oft, wie dies bis zum Aufbrauch des Vorrats körnigen Guts erforderlich sein sollte, eine oder mehrere Leitungen oder eine oder mehrere Gruppen von mehreren Leitungen bedarfsweise abgesperrt und/oder wiederzugeschaltet werden.

Die im Folgenden dargestellten Vorrichtungen sind nur beispielhaft, des besseren Verständnisses wegen, beschrieben und sind selbst nicht Teil der beanspruchten Erfindung.

Ein zuvor beschriebenes Verfahren kann durch eine in Fig. 1, Fig. 2, Fig. 3, Fig. 4, Fig. 5, Fig. 6, Fig. 7, Fig. 8, Fig. 9, Fig. 10, Fig. 11 und Fig. 12 ganz oder teilweise dargestellte und zur Durchführung eines zuvor beschriebenen Verfahrens geeignete Vorrichtung 01 zur Verteilung körnigen Guts auf mehrere, beispielsweise zumindest teilweise durch Schläuche gebildete Leitungen 02 verwirklicht werden.

Die Vorrichtung 01 zur Verteilung körnigen Guts auf mehrere, beispielsweise durch Schläuche gebildete Leitungen 02, umfasst Mittel 04 zur Erzeugung eines Mischstroms aus einem als Trägermedium dienenden Luftstrom und diesem beigemengtem körnigen Gut, beispielsweise umfassend eine Einrichtung zur Erzeugung eines Luftstroms, wie etwa ein Gebläse 40, und eine Einrichtung zur Beimengung körnigen Guts zu dem Luftstrom, beispielsweise umfassend ein Zellenrad und/oder eine Venturi-Düse.

Die Vorrichtung 01 umfasst darüber hinaus ein einen um eine Rotationsachse 100 drehbar gelagerten Rotor 05 beherbergendes Verteilergehäuse 06.

Das Verteilergehäuse 06 weist eine den Rotor 05 zumindest abschnittsweise umgebende Gehäusewandung 07 auf.

Das Verteilergehäuse 06 weist eine einen Übergabequerschnitt aufspannende Eintrittsöffnung 10 und mindestens eine Mündungsöffnung 11 auf.

Die Eintrittsöffnung 10 kann an zumindest einer der beiden entlang der Rotationsachse 100 gegenüberliegenden Stirnseiten des Verteilergehäuses 06 vorgesehen sein. Die Mündungsöffnung 11 kann an der gegenüberliegenden Stirnseite vorgesehen sein, wie in Fig. 8 dargestellt, oder sie kann beispielsweise als ringförmiger, radialer Auslass am Übergang zwischen einer Stirnseite und einer die gegenüberliegenden Stirnseiten miteinander verbindenden, beispielsweise durch die Gehäusewandung 07 gebildeten Mantelfläche angeordnet sein, wie in Fig. 1, Fig. 2, Fig. 3, Fig. 4, Fig. 5, Fig. 6, Fig. 7, Fig. 9, Fig. 10, Fig. 11 dargestellt.

Der Rotor 05 nimmt einen hohlzylinderförmigen Verteilerraum 03 mit einer mit der Rotationsachse 100 übereinstimmenden Hohlzylinderachse ein. In der Gehäusewandung 07 sind eine der Anzahl der Leitungen 02 und/oder der Anzahl von Gruppen aus mehreren Leitungen 02 entsprechende Zahl von Abgabeöffnungen 08 in unterschiedlichen, normal zur Rotationsachse 100 liegenden Abgabequerschnitten 09 angeordnet. Dabei ist jeder Leitung 02 oder jeder Gruppe aus mehreren Leitungen 02 ein eigener, normal zur Rotationsachse 100 liegender Abgabequerschnitt 09 zugeordnet.

Beispielsweise kann eine Gruppe von mehreren Leitungen 02 durch an mehrere im selben Abgabequerschnitt 09 liegende Abgabeöffnungen 08 angeschlossene Leitungen 02 gebildet sein, wie dies in den mindestens zwei unterschiedlichen Abgabequerschnitten 09 bei den in Fig. 1, Fig. 2, Fig. 3, Fig. 4, Fig. 5, Fig. 6, Fig. 7, Fig. 8, Fig. 9, Fig. 10 und Fig. 11 gezeigten Vorrichtungen 02 jeweils der Fall ist.

Jeder einer Leitung 02 oder einer Gruppe aus mehreren Leitungen 02 zugeordnete Abgabequerschnitt 09 ist von den den verbleibenden Leitungen 02 oder einer Gruppen aus mehreren Leitungen 02 zugeordneten Abgabequerschnitten 09 verschieden. Die den verschiedenen Leitungen 02 oder Gruppen aus mehreren Leitungen 02 zugeordneten unterschiedlichen Abgabequerschnitte 09 liegen entlang der Rotationsachse 100 versetzt parallel zueinander.

An jede Abgabeöffnung 08 ist eine Leitung 02 oder eine Gruppe von Leitungen 02 angeschlossen oder anschließbar.

Die Vorrichtung 01 weist außerdem geeignete, beispielsweise mit dem Rotor 05 verbundene oder mit diesem verbindbare Antriebsmittel 12 auf, um den Rotor 05 in eine Rotation um die Rotationsachse 100 zu versetzen.

Ferner weist die Vorrichtung 01 eine die Mittel 04 zur Erzeugung des Mischstroms mit der Eintrittsöffnung 10 verbindende Zufuhrleitung 13 auf.

Die Vorrichtung 01 zeichnet sich dadurch aus, dass der Rotor 05 eine der Anzahl der Leitungen 02 und/oder der Anzahl von Gruppen aus mehreren Leitungen 02 entsprechende Zahl oder einem ganzzahligen Vielfachen dieser Zahl von radial von der Rotationsachse 100 abstehende Sektortrennwände 14 aufweist, welche den hohlzylinderförmigen Verteilerraum 03 in eine der Anzahl der einzelnen Leitungen 02 und/oder der Anzahl von Gruppen aus mehreren Leitungen 02 entsprechende Zahl oder einem ganzzahligen Vielfachen dieser Zahl von die Rotationsachse 100 gemeinsam umgebenden, jeweils einseitig entlang der Rotationsachse 100, beispielsweise parallel zueinander verlaufende, mit einer Rotation des Rotors 05 um die Rotationsachse 100 umlaufende, beispielsweise kreiszylindersektor- und damit kuchenstückförmige Sektorkanäle 15 unterteilt.

Jeder Sektorkanal 15 erstreckt sich einseitig von der Rotationsachse 100 entlang dieser.

Zusammen umgeben alle Sektorkanäle sowie diese trennende Sektortrennwände 14 bündelartig gemeinsam die Rotationsachse 100, wobei jeder Sektorkanal 15 die Rotationsachse 100 nur zum Teil umgibt.

Die durch die Sektortrennwände 14 voneinander getrennten Sektorkanäle 15 überführen den im Übergabequerschnitt in den hohlzylinderförmigen Verteilerraum 03 eintretenden Mischstrom in ein um die Rotationsachse 100 rotierendes Bündel von Teilströmen.

Jeder Sektorkanal 15 teilt einen Teilstrom von dem Mischstrom ab. Jeder Sektorkanal 15 wird von einem Teilstrom des Mischstroms durchströmt. Jeder Teilstrom verläuft innerhalb eines eigenen Sektorkanals 15.

Beispielsweise können die Sektorkanäle 15 und damit auch die durch sie hindurchströmenden Teilströme parallel zueinander sowie zur Rotationsachse 100 verlaufen.

Das Bündel aus Sektorkanälen 15 kann sich entlang der Rotationsachse 100 von der Eintrittsöffnung 10 zu den Abgabequerschnitten 09 und/oder zur Mündungsöffnung 11 hin kegelförmig weiten. Mit fortschreitendem Abstand zur Eintrittsöffnung 10 entlang der Rotationsachse 100 und zunehmender Annäherung an die Abgabequerschnitte 09 und/oder zur Mündungsöffnung 11 hin kann ebenfalls eine Zunahme des Abstands nach innen, zur Rotationsachse 100 hin einhergehen. In diesem Fall verlaufen die Sektorkanäle 15 innerhalb eines Kegelstumpfrings.

Die Sektorkanäle 15 können grundsätzlich eine beliebige Querschnittsform normal zur Rotationsachse 100 aufweisen. Die Querschnittsform ist dabei grundsätzlich durch die Gestalt der Sektortrennwände 14 bedingt.

Der Rotor 05 kann zu einer oder zu den entlang der Rotationsachse 100 gegenüberliegenden Stirnseiten des Verteilergehäuses 06 und der zumindest einen, beispielsweise in wenigstens einer der Stirnseiten angeordneten Mündungsöffnung 11 hin offen sein.

Der Rotor 05 kann durch die Mündungsöffnung 11 aus dem Verteilergehäuse 06 herausschauen. Dabei kann der Rotor 05 nicht via der Abgabeöffnungen 08 an die an diese angeschlossenen Leitungen 02 oder Gruppen von mehreren Leitungen 02 abgegebenes körniges Gut radial weg von der Rotationsachse 100 herausschleudern.

Die Antriebsmittel 12 können einen eigenen Antriebsmotor 120 umfassen, mit dessen Motorwelle der Rotor 05 direkt oder indirekt über ein Getriebe verbunden ist. Alternativ können die Antriebsmittel 12 eine Verbindung des Rotors 05 mit einem Motor beispielsweise einer Einrichtung zur Erzeugung eines Luftstroms, wie etwa eines Gebläses 40, der Mittel 04 zur Erzeugung des Mischstroms umfassen. Eine solche Verbindung kann durch eine Verbindungswelle 41 hergestellt sein.

Der Rotor 05 kann zumindest abschnittsweise als ein nach außen radial weg von der Rotationsachse 100 offener Sternrotor mit die benachbarten Sektorkanäle 15 voneinander trennenden, radial von der Rotationsachse 100 abstehenden Sektortrennwänden 14 ausgeführt sein.

Die Sektortrennwände 14 können hierbei fest, beispielsweise durch radial von der Rotationsachse 100 abstehende, plattenartige Wandelemente, oder - schonend für das körnige Gut, beispielsweise am Eintritt in den Rotor 05 - nachgiebig, beispielsweise durch radial von der Rotationsachse 100 abstehende, bürstenartige Borstenreihen gebildet sein.

Alternativ oder zusätzlich kann der Rotor 05 zumindest abschnittsweise als ein nach außen radial weg von der Rotationsachse 100 geschlossener Trommelrotor 50 mit einem hohlzylinderförmigen, rohr- oder rohrabschnittsförmigen Außenring 51 beziehungsweise einer Außenringwandung und mit die benachbarten Sektorkanäle 15 voneinander trennenden, radial von der Rotationsachse 100 zum Außenring 51 abstehenden Sektortrennwänden 14 ausgeführt sein.

Der Außenring 51 ist mit jeweils einem Abgabefenster 52 je Sektorkanal 15 versehen. Die Abgabefenster 52 sind entsprechend der Zuordnung der Sektorkanäle 15 zu den verschiedenen Abgabequerschnitten 09 entlang der Rotationsachse 100 versetzt angeordnet.

In dem Außenring 51 beziehungsweise in der Außenringwandung sind demnach in den verschiedenen Abgabequerschnitten 09 für die einzelnen Sektorkanäle 15 entlang der Rotationsachse 100 versetzt jeweils einem Sektorkanal 15 zugeordnete Abgabefenster 52 entsprechend der in den verschiedenen Abgabequerschnitten 09 in der Gehäusewandung 07 angeordneten Abgabeöffnungen 08 entlang der Rotationsachse 100 versetzt angeordnet.

Somit kann der Rotor 05 alternativ als ein nach außen radial weg von der Rotationsachse 100 geschlossener Trommelrotor 50 mit einem mit entsprechend den verschiedenen Abgabequerschnitten 09 seiner Sektorkanäle 15 angeordneten Abgabefenstern 52 versehenen hohlzylinderförmigen Außenring 51 und mit die benachbarten Sektorkanäle 15 voneinander trennenden, radial von der Rotationsachse 100 zum Außenring 51 abstehenden Sektortrennwänden 14 ausgeführt sein. In dem Außenring 51 sind Abgabefenster 52 der Sektorkanäle 15 entsprechend der verschiedenen Abgabequerschnitte 09 entlang der Rotationsachse 100 versetzt angeordnet.

Überstreicht das Abgabefenster 52 eines Sektorkanals 15 während der Rotation des Trommelrotors 50 um die Rotationsachse 100 eine durch Übereinstimmung des Abgabequerschnitts 09 diesem Sektorkanal 15 zugeordnete Abgabeöffnung 08, an welche eine Leitung 02 oder eine Gruppe von mehreren Leitungen 02 angeschlossen ist, so wird zumindest das von einem durch den entsprechenden Sektorkanal 15 strömenden Teilstrom mittransportierte körnige Gut an diese Leitung 02 oder diese Gruppe von mehreren Leitungen 02 abgegeben.

Der Trommelrotor 50 umgibt oder bildet hierbei den Verteilerraum 03. Der Trommelrotor 50 selbst ist drehbar um die Rotationsachse 100 in einem von einem Verteilergehäuse 06 beherbergten Verteilergehäuseinnenraum angeordnet, der selbst hohlzylinderförmig mit sich längs der Rotationsachse 100 erstreckender Hohlzylinderachse gestaltet sein kann, oder der in den einzelnen Abgabequerschnitten 09 eine Geometrie aufweisen kann, welche sich beim Überstreichen durch ein Abgabefenster 52 während eines Umlaufs des Trommelrotors 50 um die Rotationsachse 100 beispielsweise stetig zu einem Abgaberaum 80 hin weitet, der beispielsweise tangential zur Rotationsrichtung eine angeschlossene Leitung 02 übergeht. Beispielsweise kann der Anschluss der Leitung 02 an den Abgaberaum 80 die Abgabeöffnung 08 bilden, oder ein Mündungsquerschnitt einer an einen Abgaberaum 80 angeschlossenen Leitung 02 kann eine Abgabeöffnung 08 bilden.

Zur Absperrung einzelner Leitungen 02 oder Gruppen von mehreren Leitungen 02 durch Verschließen der Abgabeöffnungen 08 oder -fenster 52 eines Abgabequerschnitts 09 nach dem anderen kann der Rotor 05, wie in Fig. 2, Fig. 3, Fig. 4 durch Doppelpfeile H angedeutet, und/oder ein konzentrisch zum Rotor 05 angeordneter, beispielsweise rohr- oder rohrabschnittförmiger Schieber 17, wie in Fig. 5, Fig. 6, Fig. 7 durch Doppelpfeile J angedeutet, parallel zur Rotationsachse 100 beweglich angeordnet sein.

Beispielsweise kann der Innendurchmesser eines zur Absperrung einzelner Leitungen 02 oder Gruppen von mehreren Leitungen 02 parallel zur Rotationsachse 100 beweglich angeordneten Schiebers 17 im Wesentlichen einem Außendurchmesser des Rotors 05 entsprechen. Der Schieber 17 ist in diesem Fall zwischen dem Rotor 05 und der Gehäusewandung 07 in einen von dem Verteilergehäuse 06 umschlossenen Verteilergehäuseinnenraum einführbar.

Alternativ kann der Außendurchmesser eines zur Absperrung einzelner Leitungen 02 oder Gruppen von mehreren Leitungen 02 parallel zur Rotationsachse 100 beweglich angeordneten Schiebers 17 wie in Fig. 5, Fig. 6, Fig. 7 dargestellt mit dem Innendurchmesser des Außenrings 51 eines als Trommelrotor 50 ausgeführten Rotors 05 übereinstimmen. Der mit Längsschlitzen für die Sektortrennwände 14 versehene Schieber 17 wird hierbei innen in den Rotor 05 eingeschoben und verschließt die im Außenring 51 angeordneten Abgabefenster 52 eines Abgabequerschnitts 09 nach dem anderen.

Alternativ oder zusätzlich zu einer Absperrung durch einen entlang der Rotationsachse 100 beweglichen rohr- oder rohrabschnittsförmigen Schieber 17 kann der Rotor 05 im Falle einer Ausführung als ein Trommelrotor 50 entlang der Rotationsachse 100 längsverschiebbar angeordnet sein, wie in Fig. 2, Fig. 3, Fig. 4 durch Doppelpfeile H angedeutet. Hierdurch wird ebenfalls zur Absperrung einzelner Leitungen 02 oder Gruppen von mehreren Leitungen 02 eine neue Zuordnung der Abgabefenster 52 der Sektorkanäle 15 und der durch die den einzelnen Leitungen 02 oder Gruppen von mehreren Leitungen 02 zugeordneten Abgabeöffnungen 08 definierten Abgabequerschnitte 09 erhalten. Die Abgabefenster 52 eines Sektorkanals 15 nach dem anderen können hierbei aus dem mit Abgabequerschnitte 09 definierenden Abgabeöffnungen 08 versehenen Bereich der Gehäusewandung 07 des Verteilergehäuses 06 beziehungsweise eines von diesem umschlossenen Verteilergehäuseinnenraums herausgeschoben werden. Abschnitte des Rotors 05, in denen keine Abgabefenster 52 im Außenring 51 angeordnet sind, überdecken hierdurch die Abgabeöffnungen 08 eines Abgabequerschnitts 09 nach dem anderen. Ein Sektorkanal 15, der zuvor einer oder mehreren Abgabeöffnungen 08 eines anderen, als des in Verschieberichtung gesehen letzten Abgabequerschnitts 09 zugeordnet war, gibt nunmehr das von dem durch ihn hindurchströmenden Teilstroms transportierte körnige Gut durch einem nächsten Abgabequerschnitt 09 zugeordnete Abgabeöffnungen 08 ab. Ein Teilstrom, der durch einen Sektorkanal 15 hindurchströmt, der zuvor einer oder mehreren Abgabeöffnungen 08 eines in Verschieberichtung gesehen letzten Abgabequerschnitts 09 zugeordnet war, tritt hingegen mitsamt dem von ihm mittransportierten körnigen Gut durch die Mündungsöffnung 11 aus.

Durch die Mündungsöffnung 11 abgegebenes körniges Gut kann beispielsweise mittels eines beispielsweise an der Mündungsöffnung 11 oder in einem sich an die Mündungsöffnung 11 anschließenden, in Fig. 1, Fig. 9, Fig. 10, Fig. 11 dargestellten Sammelkanal 110 angeordneten Sensors 16 erfasst werden.

Vermittels einer Drehwinkelerfassung des Rotors 05 kann nicht nur eine Verstopfung erfasst oder eine Absperrung bestätigt werden, sondern es kann darüber hinaus darauf rückgeschlossen werden, welcher Sektorkanal 15 und damit welcher Abgabequerschnitt 09 verstopft oder abgesperrt ist.

Wie bereits angedeutet, kann das Verteilergehäuse 06 einen Verteilergehäuseinnenraum beherbergen. Die Gehäusewandung 07 begrenzt einen solchen gegebenenfalls vorgesehenen Verteilergehäuseinnenraum radial weg von der Rotationsachse 100. Der vom Rotor 05 eingenommene hohlzylinderförmige Verteilerraum 03 nimmt den gegebenenfalls vorgesehenen Verteilergehäuseinnenraum wenigstens zum Teil ein.

Wichtig ist hervorzuheben, dass zum Antrieb des Rotors 05 eine bereits vorhandene Einrichtung, beispielsweise ein Gebläse 40 der Mittel 04 zur Erzeugung des Mischstroms, mit dem Rotor 05 gekoppelt werden kann. Hierzu kann wie in Fig. 1 bis Fig. 6 und in Fig. 12 dargestellt eine Verbindungswelle 41 zwischen dem Gebläse 40 und dem Rotor 05 vorgesehen sein.

Alternativ kann wie in Fig. 7, Fig. 9, Fig. 10, Fig. 11 dargestellt ein gesonderter Antriebsmotor 120 vorgesehen sein, dessen Ausgangswelle den Rotor in Rotation um die Rotationsachse versetzt.

Eine zusätzliche Variante ist in Fig. 8 dargestellt. Diese nutzt den Luftstrom des Mischstroms oder einen von einer Einrichtung zur Erzeugung eines Luftstroms der Mittel 04 zur Erzeugung des Mischstroms abgezweigten Teilluftstrom zum Antrieb des Rotors 05. Hierzu ist eine Turbine 90, im in Fig. 8 dargestellten Ausführungsbeispiel in tangentialer Bauart, mit dem Rotor 05 verbunden oder über eine Verbindungswelle mit diesem gekoppelt.

Ein mittels einer zuvor beschriebenen Vorrichtung 01 ausführbares Verfahren sieht in jedem Fall vor, zunächst einen Mischstrom durch Beimengung Körner umfassenden körnigen Guts zu einem als Trägermedium dienenden Luftstrom zu erzeugen. Anschließend tritt der Mischstrom in einem Übergabequerschnitt 10 in einen hohlzylinderförmigen Verteilerraum 03 mit mindestens einer Mündungsöffnung 11 ein. Dabei wird er in ein um eine mit der Hohlzylinderachse des Verteilerraums übereinstimmende Rotationsachse 100 rotierendes Bündel von einer der Anzahl der Leitungen 02 und/oder der Anzahl von Gruppen aus mehreren Leitungen 02 entsprechende Zahl oder deren ganzzahligem Vielfachen von jeweils der Mündungsöffnung 11 zustrebenden, beispielsweise parallel zueinander sowie zur Rotationsachse 100 verlaufenden Teilströmen überführt. Jeder Teilstrom weist im Übergabequerschnitt einen Teilstromeintrittsquerschnitt auf, von denen jeder während eines Umlaufs um die Rotationsachse 100 den Übergabequerschnitt überstreicht. Durch die Rotation des Bündels wird dann innerhalb jeden Teilstroms eine Konzentration des körnigen Guts radial weg von der Rotationsachse 100 erzeugt. Schließlich erreicht jeder der Mündungsöffnung 11 zustrebende Teilstrom einen ihm zugeordneten Abgabequerschnitt 09, in dem mindestens eine in eine Leitung 02 oder eine Gruppe von mehreren Leitungen 02 mündende Abgabeöffnung 08 angeordnet ist. Jedem Abgabequerschnitt 09 ist eine Leitung 02 oder eine Gruppe von mehreren Leitungen 02 zugeordnet. Durch die vermittels der Rotation erzeugten Zentrifugalkräfte wird zumindest in den Teilströmen enthaltenes körniges Gut durch die jeweilige Abgabeöffnung 08 in eine Leitung 02 und/oder Gruppe von mehreren Leitungen 02 abgegeben.

Sowohl das Verfahren, als auch die Vorrichtung 01 erlauben beispielsweise in Verbindung mit einem Reservoir zur Vorhaltung Körner umfassenden körnigen Guts und einer Beimengung diesem Reservoir entnommenen körnigen Guts zu einem Luftstrom eine Vergleichmäßigung der Verteilung auf mehrere individuell oder gruppenweise absperrbare und wiederzuschaltbare Leitungen 02.

Die Vorrichtung 01 ist insbesondere zur Verwendung in Verbindung mit einer Verteilmaschine 20 für körniges Gut, wie beispielsweise einer Sämaschine vorgesehen.

Ein Ausführungsbeispiel einer Verteilmaschine 20 für körniges Gut ist in Fig. 12 dargestellt. Der Übersichtlichkeit halber sind jedoch keine Ausbringungsorgane an den Enden der Leitungen 02 dargestellt.

Die Verteilmaschine 20 umfasst einen auf einem Fahrgestell 21 angeordneten, ein Reservoir Körner umfassendes körniges Gut beherbergenden trichterförmigen Vorratsbehälter 22. Mittel 04 zur Erzeugung eines Mischstroms einer Vorrichtung 01 zur Verteilung körnigen Guts auf mehrere Leitungen 02 sind am Ende des Trichters unter dem Vorratsbehälter 22 angeordnet. Eine Verbindungswelle 41 koppelt den im Verteilergehäuse 06 beherbergten Rotor 05 mit einer als ein Gebläse 40 ausgeführten Einrichtung zur Erzeugung eines Luftstroms der Mittel 04 zur Erzeugung eines Mischstroms. Die Antriebsmittel 12 der Vorrichtung 01 umfassen den Motor des Gebläses 40 und die Verbindungswelle 41. Dies schließt die Beschreibung der Vorrichtungen, die nicht Teil der beanspruchten Erfindung sind, ab.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Leitung
- 03: Verteilerraum
- 04: Mittel zur Erzeugung eines Mischstroms
- 05: Rotor
- 06: Verteilergehäuse
- 07: Gehäusewandung
- 08: Abgabeöffnung
- 09: Abgabequerschnitt
- 10: Eintrittsöffnung
- 11: Mündungsöffnung
- 12: Antriebsmittel
- 13: Zufuhrleitung
- 14: Sektortrennwand
- 15: Sektorkanal
- 16: Sensor
- 17: Schieber

- 20: Verteilmaschine
- 21: Fahrgestell
- 22: Vorratsbehälter

- 40: Gebläse
- 41: Verbindungswelle

- 50: Trommelrotor
- 51: Außenring
- 52: Abgabefenster

- 80: Abgaberaum
- 90: Turbine
- 100: Rotationsachse
- 110: Sammelkanal
- 120: Antriebsmotor

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt

- A: Pfeil
- B: Pfeil
- C: Pfeil
- D: Pfeil
- E: Pfeil
- F: Pfeil
- G: Pfeil
- H: Doppelpfeil
- J: Doppelpfeil

## Patentansprüche

1. Verfahren zur Verteilung körnigen Guts auf mehrere Leitungen (02), wobei:
- zunächst einen Mischstrom durch Beimengung Körner umfassenden körnigen Guts zu einem als Trägermedium dienenden Luftstrom erzeugt wird,
- anschließend der Mischstrom in einem Übergabequerschnitt (10) in einen hohlzylinderförmigen Verteilerraum (03) mit mindestens einer Mündungsöffnung (11) eintritt und dabei in ein um eine mit der Hohlzylinderachse des Verteilerraums übereinstimmende Rotationsachse (100) rotierendes Bündel von einer der Anzahl der Leitungen (02) und/oder der Anzahl von Gruppen aus mehreren Leitungen (02) entsprechende Zahl oder deren ganzzahligem Vielfachen von jeweils der Mündungsöffnung (11) zustrebenden Teilströmen überführt wird, wobei jeder Teilstrom im Übergabequerschnitt einen Teilstromeintrittsquerschnitt aufweist, von denen jeder während eines Umlaufs um die Rotationsachse (100) den Übergabequerschnitt überstreicht,
- dann durch die Rotation des Bündels innerhalb jeden Teilstroms eine Konzentration des körnigen Guts radial weg von der Rotationsachse (100) erzeugt wird, und
- schließlich jeder der Mündungsöffnung (11) zustrebende Teilstrom einen ihm zugeordneten Abgabequerschnitt (09) erreicht, in dem mindestens eine in eine Leitung (02) oder eine Gruppe von mehreren Leitungen (02) mündende Abgabeöffnung (08) angeordnet ist, wobei jedem Abgabequerschnitt (09) eine Leitung (02) oder eine Gruppe von mehreren Leitungen (02) zugeordnet ist, und wobei durch die vermittels der Rotation erzeugten Zentrifugalkräfte zumindest in den Teilströmen enthaltenes körniges Gut durch die jeweilige Abgabeöffnung (08) in eine Leitung (02) und/oder Gruppe von mehreren Leitungen (02) abgegeben wird.

2. Verfahren nach Anspruch 1, wobei mindestens eine Leitung (02) und/oder mindestens eine Gruppe von mehreren Leitungen (02) und/oder die zumindest eine in diese mündende Abgabeöffnung (08) absperrbar ist, wobei ein Teilstrom, dem ein Abgabequerschnitt (09) mit einer oder mehreren in eine abgesperrte Leitung (02) und/oder in eine abgesperrte Gruppe von mehreren Leitungen (02) mündenden Abgabeöffnungen (08) zugeordnet ist, mitsamt dem von ihm mittransportierten körnigen Gut durch die Mündungsöffnung (11) austritt.

3. Verfahren nach Anspruch 1 oder 2, wobei aus der Mündungsöffnung (11) austretendes körniges Gut erfasst wird.

4. Verfahren nach Anspruch 1, 2 oder 3, wobei aus der Mündungsöffnung (11) austretendes körniges Gut gesammelt wird.

5. Verfahren nach einem der Ansprüche 1 bis 4, wobei aus der Mündungsöffnung (11) austretendes körniges Gut erneut dem Luftstrom beigemengt und der Verteilung zugeführt wird.

## Claims

1. A method for distributing granular material to a plurality of lines (02), wherein:
- firstly, a mixed flow is produced by adding granular material comprising grains to an airflow used as the carrier medium,
- the mixed flow then, in a transfer cross-section (10), enters a hollow-cylindrical distributor chamber (03) comprising at least one outlet opening (11) and in so doing is transferred into a bundle, rotating about an axis of rotation (100) coinciding with the hollow-cylinder axis of the distributor chamber, of a number or integer multiple thereof of partial flows corresponding to the number of lines (02) and/or the number of groups of a plurality of lines (02), said partial flows each tending toward the outlet opening (11), wherein each partial flow in the transfer cross-section has a partial flow inlet cross-section, each of which sweeps over the transfer cross-section during a revolution about the axis of rotation (100),
- as a result of the rotation of the bundle, a concentration of the granular material is then generated within each partial flow, radially away from the axis of rotation (100), and
- lastly, each partial flow tending toward the outlet opening (11) reaches a discharge cross-section (09) which is associated with the partial flow and in which at least one discharge opening (08) leading into a line (02) or a group of a plurality of lines (02) is arranged, wherein a line (02) or a group of a plurality of lines (02) is associated with each discharge cross-section (09), and wherein, as a result of the centrifugal forces generated by means of the rotation, at least granular material contained in the partial flows is discharged through the discharge opening (08) into a line (02) and/or group of a plurality of lines (02).

2. The method according to claim 1, wherein at least one line (02) and/or at least one group of a plurality of lines (02) and/or the at least one discharge opening (08) leading into said line or group of a plurality of lines can be shut off, wherein a partial flow with which a discharge cross-section (09) having one or more discharge openings (08) leading into a shut-off line (02) and/or into a shut-off group of a plurality of lines (02) is associated exits through the outlet opening (11) together with the granular material transported by said partial flow.

3. The method according to claim 1 or 2, wherein granular material exiting from the outlet opening (11) is detected.

4. The method according to claim 1, 2 or 3, wherein granular material exiting from the outlet opening (11) is collected.

5. The method according to any one of claims 1 to 4, wherein granular material exiting from the outlet opening (11) is again added to the air flow and is supplied to the distribution system.

## Revendications

1. Dispositif de distribution d'un produit granuleux à une pluralité de conduites (02), dans lequel :
- un flux mixte est d'abord produit en mélangeant un produit granuleux comprenant des grains à un flux d'air servant de milieu porteur,
- ensuite, le flux mixte, dans une section transversale de transfert (10), entre dans une chambre de distribution cylindrique creuse (03) présentant au moins une embouchure (11), puis est ainsi converti en un ensemble d'un nombre, ou d'un multiple entier de ce nombre, correspondant au nombre de conduites (02) et/ou au nombre de groupes de plusieurs conduites (02), tournant autour d'un axe de rotation (100) coïncidant avec l'axe de cylindre creux de la chambre de distribution, de flux partiels se dirigeant chacun vers l'embouchure (11), chaque flux partiel présentant, dans la section transversale de transfert, une section transversale d'entrée de flux partiel, chacune balayant, pendant un tour autour de l'axe de rotation (100), la section transversale de transfert,
- ensuite, par la rotation de l'ensemble, une concentration du matériau granuleux est générée, au sein de chaque flux partiel, s'écartant radialement de l'axe de rotation (100) et
- enfin, chacun des flux partiels se dirigeant vers l'embouchure (11) atteint une section transversale de décharge (09) qui lui est associée, dans laquelle au moins une ouverture de décharge (08) débouchant dans une conduite (02) ou un groupe de plusieurs conduites (02) est située, chaque section transversale de décharge (09) se voyant attribuer une conduite (02) ou un groupe de plusieurs conduites (02), et les forces centrifuges générées par la rotation permettant de décharger dans une conduite (02) et/ou un groupe de plusieurs conduites (02), en passant par l'ouverture de décharge (08) correspondante, au moins le produit granuleux contenu dans les flux partiels.

2. Procédé selon la revendication 1, dans lequel au moins une conduite (02) et/ou au moins un groupe de plusieurs conduites (02) et/ou l'au moins une ouverture de décharge (08) débouchant dans celle-ci peuvent être obturés, dans lequel un flux partiel, auquel une section transversale de décharge (09) avec une ou plusieurs ouvertures de décharge (08) débouchant dans une conduite (02) obturée et/ou dans un groupe de plusieurs conduites (02) obturées est associée, sort par l'embouchure (11) conjointement avec le produit granuleux qu'il transporte.

3. Procédé selon la revendication 1 ou 2, dans lequel le produit granuleux sortant de l'embouchure (11) est détecté.

4. Procédé selon la revendication 1, 2 ou 3, dans lequel le produit granuleux sortant de l'embouchure (11) est collecté.

5. Procédé selon l'une des revendications 1 à 4, dans lequel le produit granuleux sortant de l'embouchure (11) est de nouveau mélangé au flux d'air et envoyé à la distribution.
